# EUROPÄISCHE PATENTSCHRIFT

(11) **EP 1 890 928 B1**
(45) Veröffentlichungstag und Bekanntmachung des Hinweises auf die Patenterteilung: **08.04.2009**
(21) Anmeldenummer: 06706918.7
(22) Anmeldetag: 14.02.2006
(51) Int. Cl.: B62D 55/24

(54) **BANDKETTE FÜR FAHRZEUGE**
BAND CHAIN FOR VEHICLES
CHENILLE A BANDE POUR VEHICULES

(30) Priorität: 25.02.2005 DE 102005009199
(43) Veröffentlichungstag der Anmeldung: 27.02.2008
(73) Patentinhaber: Diehl Remscheid GmbH & Co. KG, 42857 Remscheid (DE)
(72) Erfinder: SPIES, Klaus, 42859 Remscheid (DE); SCHLUPP, Kurt, 42659 Solingen (DE); HÜTZ, Volker, 42719 Solingen (DE)
(74) Vertreter: Kummer, Ralf
(86) Internationale Anmeldenummer: PCT/EP2006/001311
(87) Internationale Veröffentlichungsnummer: WO 2006/089659

(56) Entgegenhaltungen:
- DE-U1- 20 114 679
- US-A- 3 120 409
- US-A1- 2004 178 677

## Beschreibung

Die Erfindung bezieht sich auf eine Bandkette für Fahrzeuge nach dem. Oberbegriff des Anspruchs 1. Dokument DE 201 146 794 beschreibt eine solche Bandkette.

Bei Bandketten, die einen, im mittleren Bandteil liegenden Zugstrang aufweise, treten bei Umschlingung der Umlenkrollen und der Triebkränze unter der Wirkung der Kettenzugkräfte Radialkräfte auf, die auf die Haftflächen Gummi/Querträger und Gummi/Zugträger Zugspannungen erzeugen. Diese Zugspannungen führen letztlich zum Ablösen des mittleren Bandteiles von den Querträgern und den Zugträgern. Ein vorzeitiger Ausfall der Bandkette ist die Folge.

Der Erfindung liegt daher die Aufgabe zugrunde, Maßnahmen vorzuschlagen, die das vorzeige Ablösen des mittleren Bandes verhindern.

Die Erfindung löst diese Aufgabe entsprechend den kennzeichnenden Merkmalen des Anspruchs 1.

Vorteilhafte Weiterbildungen sind den Unteransprüchen zu entnehmen.

Durch die gekapselte Lagerung der mittleren Zugträger durch das Blechformteil wird der mittlere Bandteil in seinem kritischen Spannungsbereich gestützt. Die Zugspannungen sind im Bereich der Haftflächen derart reduziert, dass das vorzeitige Ablösen des mittleren Bandteiles nicht auftritt.

Überraschend ist auch, dass der schmale, schlanke Streifen diese Stützfunktion erfüllt. Es sind also keine breiten, massiven Teile erforderlich. Das aus Stahl bestehende Blechformteile ist daher kostengünstig und von geringem Gewicht.

Das Blechformteil ist im Bereich des Triebkranzeingriffes an den Querträger anvulkanisiert und greift in den Treibkranz ein.

Wesentlich ist auch die minimale Geräuschentwicklung beim Eingriff der Triebkranzverzahnung zwischen die Blechformteile. Es liegt eine extrem hohe Dämpfung von Schwingungen an den Zahneingriffselementen vor. Diese sind großflächig in Gummi einvulkanisiert.

Ein Ausführungsbeispiel der Erfindung ist in der Zeichnung dargestellt.

Es zeigt:
- Figur 1: eine Bandkette im Teilschnitt I-I nach Figur 2,
- Figur 2: einen Teilquerschnitt II-II nach Figur 1,
- Figur 3: einen erweiterten Teilquerschnitt III-III nach Figur 1
- Figur 4: ein Blechformteil und einen Abschnitt der Quertraverse und
- Figur 5: die Bandkette nach Figur 1 in Richtung des Pfeiles V nach Figur 1

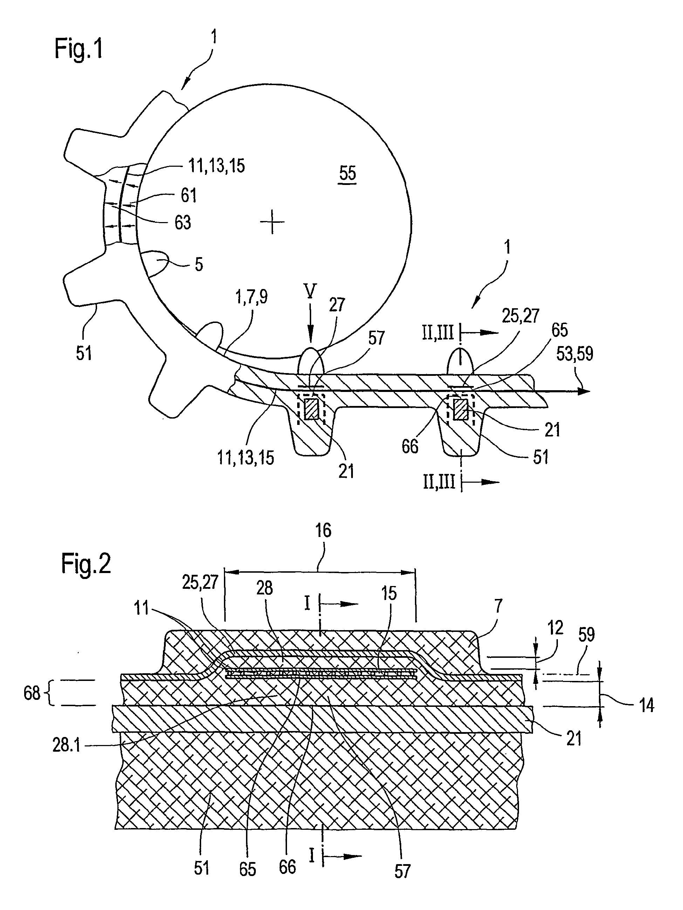

Eine Bandkette 1 entsprechend Figur 1 weist Zahneingriffsöffnungen 3, Führungszähne 5, Laufstollen 51, einen mittleren Bandteil 7 und zwei seitliche Bandteile 9 auf. In den genannten Bandteilen 7, 9 sind Zugträger 11 in Form von Untersträngen 13 und in Form eines Oberstrangs 15 einvulkanisiert.

Die Bandkette 1 umschlingt eine Umlenkrolle 55.

Weiterhin sind in der Bandkette 1 einvulkanisiert Querträger 21 aus Stahl mit den angeformten Führungszähnen 5 und Blechformteile 25.

Die Blechformteile 25 sind der wesentliche Teil einer Sandwich-Struktur. Jedem Querträger 21 ist über Gummischichten 28, 28.1 ein Blechformteil 25 zugeordnet, siehe auch die Figuren 2 bis 4.

Das Blechformteil 25 übergreift hutförmig auf der Laufwerkseite der Bandkette 1 - also jenseits des Zugträgers 11 - in einem gummigefüllten Abstand 12 den Oberstrang 15 (Fig. 2). Zwischen dem Oberstrang 15 und dem Querträger 21 besteht ein gummigefüllter Abstand 14.

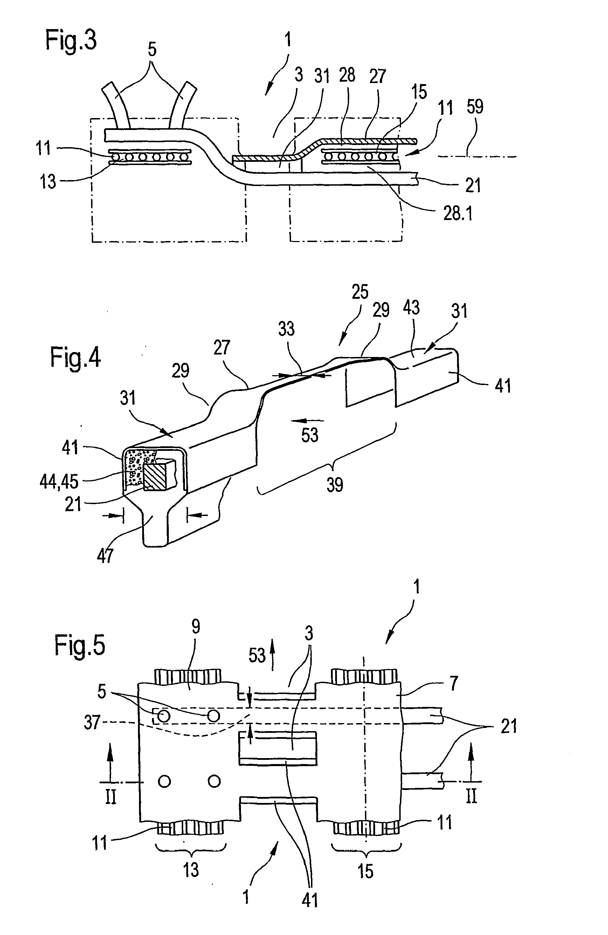

Die Blechformteile 25 sind entsprechend der Figur 4 gegliedert in einen Streifen 27, beidseitige Arme 29 und daran angeordnete Schuhe 31.

Die Breite 33 der Streifen 27 - gesehen in Laufrichtungen 53 der Bandkette 1 - entspricht etwa der halben Breite der Querträger 21.

Das Blechformteil 25 besteht aus Stahl und ist in zwei Ebenen U-förmig ausgebildet. Der erste, U-förmige Mittelabschnitt 39 ist durch den Streifen 27 und die Arme 29 sowie durch die Blechlaschen 41 der Schuhe 31 gebildet. Die Schuhe 31 sind durch die beidseitig angeordneten Blechlaschen 41 mit Platten 43 ebenfalls U-förmig ausgebildet und zwar um 90° Grad versetzt zum Mittelabschnitt 39.

Die Blechlaschen 41 umgreifen den Querträger 21 und sind über ein Gummipolster 45 im Spalt 44 mit dem Querträger 21 durch Vulkanisation verbunden.

Im Fahrbetrieb der Bandkette 1 greifen nicht gezeichnete Triebkränze in die Zahneingriffsöffnungen 3 der Bandkette 1 ein und übertragen die Kräfte über die Schuhe 31, die Gummilagerung 45 auf die Querträger 21 und über die Zugträger 11 auf die Bandkette 1. Der Triebkranzeingriff erfolgt geräuschgedämpft.

Nach der Figur 2 liegt - bei der Umschlingung um die Umlenkrolle 55 - ein kritischer Spannungsbereich 57 zwischen dem Oberstrang 15 und der Quertraverse 21 und zwar auf der gesamten Breite 16 des Oberstranges 15.

Der Oberstrang 15 bildet zusammen mit den benachbarten Untersträngen 13 die sogenannte neutrale Ebene 59 in Bezug auf Druckspannungen 61 und Zugspannungen 63, siehe auch die Figur 1.

Das Blechformteil 25 stützt den mittleren Bandteil 7 über die kritische Breite 16 des Oberstranges 15. Die Zugspannungen 63 im Bereich der Haftflächen 65, 66 sind derart reduziert, dass das Ablösen des mittleren Bandteiles 7 entsprechend dem Bereich 68, siehe Figur 2, verhindert ist.

Ein partielles Ablösen des Gummis vom Oberstrang 15 und/oder vom Querträger 21 tritt nicht mehr auf.

Das Blechformteil 25 kann auch aus einem anderen geeigneten Werkstoff, wie Kunststoff, oder einem gebündelten Kabelstrang bestehen. Wesentlich ist allein die Stützfunktion für den Oberstrang 15.

## Patentansprüche

1. Bandkette (1) für Fahrzeuge bestehend aus einem Gummiband, metallischen Querträgern (21) mit Führungszähnen (5) und Zahneingriffsöffnungen (3) sowie Zugträger (11) in Form von äußeren Untersträngen (13) und einem im mittleren Bandteil liegenden mittleren Oberstrang (15),
**dadurch gekennzeichnet,**
**dass** jeweils ein Abschnitt des Oberstranges (15) durch ein Brückenelement (25) mit einem Querträger (21) verbunden ist, indem der Oberstrang (15) im Bereich der Querträger (21) ein Teil einer gummigelagerten Sandwich-Struktur ist, bestehend aus dem Brückenelement (25), dem Oberstrang (15) und dem Querträger (21).

2. Bandkette nach Anspruch 1,
**dadurch gekennzeichnet,**
**dass** das Brückenelement (25) aus einem geeigneten Kunststoff oder aus Metall besteht, wie Blechformteil (25), Flachbandkabel.

3. Bandkette nach Anspruch 2,
**dadurch gekennzeichnet,**
**dass** das Brückenelement (25) beidseitig des Oberstranges (15) Ankerelemente (31) aufweist, und
die Ankerelemente (31) durch Vulkanisation mit den Querträgern (21) verbunden sind.

4. Bandkette nach Anspruch 3
**dadurch gekennzeichnet, dass** das Brückenelement (25) aus einem metallischen Blechformteil besteht, und
dass das Blechformteil (25) im Kreuzungsbereich mit dem Oberstrang (15) einen Streifen (27) aufweist, der in Fahrtrichtung (53) der Bandkette (1) eine Breite (33) besitzt, die etwa der halben Breite (37) des Querträgers (21) entspricht.

5. Bandkette nach Anspruch 4,
**dadurch gekennzeichnet,**
**dass** an Armen (29) des Streifens (27) die Ankerelemente angeordnet sind,
die Ankerelemente als Schuhe (31) mit seitlichen Blechlaschen (41) ausgebildet sind,
die Schuhe (31) den Querträger (21) umfassen und zwischen dem Schuh (31) und dem Querträger (21) ein etwa U-förmiger Spalt (44) besteht, der durch Gummi (45) ausgefüllt ist.

6. Bandkette nach Anspruch 5,
**dadurch gekennzeichnet,**
**dass** die Schuhe (31) als Zahneingriffselemente für den Triebkranz ausgebildet sind.

7. Bandkette nach Anspruch 4,
**dadurch gekennzeichnet,**
**dass** der Streifen (27) ein Mittelabschnitt des Blechformteiles (25) ist.

8. Bandkette nach Anspruch 5,
**dadurch gekennzeichnet,**
**dass** die Schuhe (31) Platten (43) aufweisen, die in einer parallelen Ebene zu dem Streifen (27) liegen und deren lichter Abstand (47) etwa dem 1,5-fachen der Breite (37) des Querträgers (21) entspricht.

9. Bandkette nach Anspruch 4,
**dadurch gekennzeichnet,**
**dass** das Blechformteil (25) mit seinem Streifen (27) im Druckspannungsbereich (61) und mit seinen Ankerelementen (31) im Zugspannungsbereich (63) der Bandkette (1) liegt.

10. Bandkette nach Anspruch 5,
**dadurch gekennzeichnet,**
**dass** der Streifen (27) - im Querschnitt der Bandkette (1) gesehen - etwa U-förmig ausgebildet ist und den mittleren Oberstrang (15) - getrennt durch eine Gummischicht (28) - lagert,
die Arme (29) in der spannungsneutralen Ebene (59) liegen, und
die Schuhe (31) ausgehend von dieser Ebene (59) in den Zugspannungsbereich (63) ragen und mit dem Querträger (21) durch den vulkanisierten Gummi verbunden sind.

11. Bandkette nach Anspruch 1,
**dadurch gekennzeichnet,**
**dass** die Unterstränge (13) und der Oberstrang (15) in einer Ebene (59) liegen.

## Claims

1. Band chain (1) for vehicles, composed of a rubber band, metallic cross members (21) with guide teeth (5) and tooth engagement openings (3) and also tensile members (11) in the form of outer lower strands (13) and a central upper strand (15) which is situated in the central band part,
**characterized**
**in that** in each case one section of the upper strand (15) is connected by means of a bridge element (25) to a cross member (21) by virtue of the fact that, in the region of the cross member (21), the upper strand (15) is a part of a rubber-mounted sandwich structure composed of the bridge element (25), the upper strand (15) and the cross member (21).

2. Band chain according to Claim 1,
**characterized**
**in that** the bridge element (25) is composed of a suitable plastic or of metal, such as a sheet-metal moulded part (25) or ribbon cable.

3. Band chain according to Claim 2,
**characterized**
**in that** the bridge element (25) has anchor elements (31) at both sides of the upper strand (15), and
the anchor elements (31) are connected to the cross members (21) by vulcanization.

4. Band chain according to Claim 3,
**characterized**
**in that** the bridge element (25) is composed of a metallic sheet-metal moulded part, and in that the sheet-metal moulded part (25) has, in the region in which it crosses the upper strand (15), a strip (27) which has a width (33) in the direction of travel (53) of the band chain (1), which width (33) corresponds to approximately half of the width (37) of the cross member (21).

5. Band chain according to Claim 4,
**characterized**
**in that** the anchor elements are arranged on arms (29) of the strip (27),
the anchor elements are formed as shoes (31) with lateral sheet-metal lugs (41),
the shoes (31) encompass the cross member (21) and an approximately U-shaped gap (44) is formed between the shoe (31) and the cross member (21), which gap (44) is filled with rubber (45).

6. Band chain according to Claim 5,
**characterized**
**in that** the shoes (31) are formed as tooth engagement elements for the driving ring.

7. Band chain according to Claim 4,
**characterized**
**in that** the strip (27) is a central section of the sheet-metal moulded part (25).

8. Band chain according to Claim 5,
**characterized**
**in that** the shoes (31) have plates (43) which lie in a parallel plane to the strip (27) and whose clear spacing (47) corresponds to approximately 1.5 times the width (37) of the cross member (21).

9. Band chain according to Claim 4,
**characterized**
**in that** the sheet-metal moulded part (25) lies with its strip (27) in the compressive-stress region (61) and with its anchor elements (31) in the tensile-stress region (63) of the band chain (1).

10. Band chain according to Claim 5,
**characterized**
**in that** the strip (27) is of approximately U-shaped design as viewed in cross section of the band chain (1) and serves to mount the central upper strand (15), separated by a rubber layer (28),
the arms (29) lie in the stress-neutral plane (59), and
the shoes (31) project from said plane (59) into the tensile-stress region (63) and are connected to the cross member (21) by means of the vulcanized rubber.

11. Band chain according to Claim 1,
**characterized**
**in that** the lower strands (13) and the upper strand (15) lie in a plane (59).

## Revendications

1. Chenille à bande (1) pour véhicules, constituée d'une bande de caoutchouc, de traverses (21) métalliques avec des dents de guidage (5) et d'ouvertures de mise en prise des dents (3) ainsi que de renforts de traction (11) sous la forme de chaînes inférieures (13) extérieures et d'une chaîne supérieure (15) médiane située dans la partie de bande centrale,
**caractérisée en ce que**
une portion respective de la chaîne supérieure (15) est reliée par l'intermédiaire d'un élément de pont (25) à une traverse (21), du fait que la chaîne supérieure (15) au niveau de la traverse (21) est une partie d'une structure en sandwich posée sur caoutchouc, constituée de l'élément de pont (25), de la chaîne supérieure (15) et de la traverse (21).

2. Chenille à bande selon la revendication 1,
**caractérisée en ce que**
l'élément de pont (25) est constitué d'un plastique approprié ou d'un métal, comme une pièce usinée en tôle (25), un câble plat.

3. Chenille à bande selon la revendication 2,
**caractérisée en ce que**
l'élément de pont (25) présente des deux côtés de la chaîne supérieure (15) des éléments d'ancrage (31), et
les éléments d'ancrage (31) sont reliés par vulcanisation aux traverses (21).

4. Chenille à bande selon la revendication 3,
**caractérisée en ce que**
l'élément de pont (25) est constitué d'une pièce usinée en tôle métallique, et la pièce usinée en tôle (25) présente dans la zone d'intersection avec la chaîne supérieure (15) une bande (27), qui possède dans la direction de marche (53) de la chenille à bande (1) une largeur (33), qui correspond approximativement à la moitié de la largeur (37) de la traverse (21).

5. Chenille à bande selon la revendication 4,
**caractérisée en ce que**
les éléments d'ancrage sont disposés sur des bras (29) de la bande (27),
les éléments d'ancrage sont réalisés comme des sabots (31) avec des pattes de tôle (41) latérales,
les sabots (31) englobent la traverse (21) et un interstice (44) approximativement en forme de U est constitué entre le sabot (31) et la traverse (21), lequel est rempli de caoutchouc (45).

6. Chenille à bande selon la revendication 5,
**caractérisée en ce que**
les sabots (31) sont réalisés comme des éléments de mise en prise des dents pour la couronne motrice.

7. Chenille à bande selon la revendication 4,
**caractérisée en ce que**
la bande (27) est une portion centrale de la pièce usinée en tôle (25).

8. Chenille à bande selon la revendication 5,
**caractérisée en ce que**
les sabots (31) présentent des plaques (43), qui sont situées dans un plan parallèle à la bande (27) et dont l'écartement (47) les unes des autres correspond approximativement à 1,5 fois la largeur (37) de la traverse (21).

9. Chenille à bande selon la revendication 4,
**caractérisée en ce que**
la pièce usinée en tôle (25) est située avec sa bande (27) dans la zone de tension par pression (61) et avec ses éléments d'ancrage (31) dans la zone de tension par traction (63) de la chenille à bande (1).

10. Chenille à bande selon la revendication 5,
**caractérisée en ce que**
la bande (27) - vue en coupe transversale de la chenille à bande (1) - est configurée approximativement en forme de U et supporte la chaîne supérieure médiane (15) - séparée par une couche de caoutchouc (28)-,
les bras (29) sont situés dans le plan à tension neutre (59), et
les sabots (31) à partir de ce plan (59) dépassent dans la zone de tension par traction (63) et sont reliés à la traverse (21) par le caoutchouc vulcanisé.

11. Chenille à bande selon la revendication 1,
**caractérisée en ce que**
les chaînes inférieures (13) et la chaîne supérieure (15) sont situées dans un plan (59).
